# EUROPEAN PATENT SPECIFICATION

(11) **EP 2 236 528 B1**
(45) Date of publication and mention of the grant of the patent: **03.08.2011**
(21) Application number: 10154260.3
(22) Date of filing: 22.02.2010
(51) Int. Cl.: C08F 30/02, C08F 130/02, C08F 230/02

(54) **Improved polymerizable compositions**
Verbesserte polymerisierbare Zusammensetzungen
Compositions polymérisables améliorées

(30) Priority: 30.03.2009 US 211420 P
(43) Date of publication of application: 06.10.2010
(73) Proprietor: Rohm and Haas Company, Philadelphia, Pennsylvania 19106-2399 (US)
(72) Inventor: Lemonds, Andrew M., Schwenksville, PA 19473 (US); Wilczynski, Robert, Yardley, PA 19067 (US)
(74) Representative: Buckley, Guy Julian

(56) References cited:
- EP-A1- 1 767 504
- US-A- 3 855 364
- US-A- 4 596 857
- US-A1- 2003 018 103
- US-A1- 2008 268 269

## Description

The present invention relates to a process for providing improved polymerizable compositions containing phosphoalkyl (meth)acrylate monomers which are synthesized by the reaction of a hydroxyalkyl (meth)acrylate with polyphosphoric acid (PPA).

When subjected to co-polymerization with other vinyl monomers, phosphoalkyl (meth)acrylates impart useful properties to polymers, namely those which are employed in coatings and binders and which have a wide range of uses. One application for these monomers is the promotion of polymeric coating adhesion to metal substrates. Other uses include providing flame-retardant and anti-static properties to fibers and binders for non-woven fabrics.

Phosphoalkyl (meth)acrylate monoester, i.e., the phosphate monoester, is synthesized by the phosphorylation reaction between a hydroxyalkyl (meth)acrylate and PPA having strength of 105 to 120% weight equivalents of H₃PO₄. (For example, the stoichiometric hydrolysis of 100 g of 115% PPA yields 115 g H₃PO₄.) This reaction also yields phosphate diester side-product and byproduct phosphoric acid.

Typically, the phosphorylation mixture, or a dilution thereof, is used without purification in the polymer synthesis reaction. The diester and phosphoric acid, however, are not desired components, as the impact of these impurities complicates the polymerization process and affects the polymer product. The diester is a polymer crosslinker, and while crosslinkers are commonly used in polymerizations on purpose, it is preferred to control crosslinker levels independently from other polymerization raw materials. Unwanted diester can increase polymer thickening during the polymerization process and while applying as a coating, thus making the polymer much more difficult to apply. For these reasons, minimization of the phosphoalkyl di(meth)acrylate in the phosphorylation mixture is preferred. Phosphoric acid increases the acidity of the polymerization and can cause a water sensitivity of the resulting polymer coating. Purification to isolate the monoester or increase its content requires substantial solvent extraction, which incurs significant processing costs. Thus, phosphorylation processes that increase selectivity towards the monoester and reduce phosphoric acid levels are needed.

Reduced levels of phosphoric acid in the polymerization composition can be achieved by using higher PPA grades, such as 118% or 120%, versus, for example, the 115% grade demonstrated in US 3,855,364, and ensuring an excess of the hydroxyalkyl (meth)acrylate substrate. To improve a given composition, the reaction is conducted with the increased PPA grade while at least controlling the mole ratio of the hydroxyalkyl (meth)acrylate relative to the average number of phosphoric acid anhydride units present in the PPA. Increased activity (i.e., increased anhydride content) of the higher PPA grades requires less PPA by mass for a given mole ratio, and the absolute amount of phosphoric acid byproduct is reduced.

Typically, hydroxyalkyl (meth)acrylate phosphate ester synthesis reactions such as the one disclosed in US 3,855,364, contain 55 to 75 wt.% monoester and 10 to 25 wt.% diester, when 1 to 2 moles of hydroxyalkyl (meth)acrylate are reacted with 1 P₂O₅-mole equivalent of PPA. Specifically, US 3,855,364 discloses a polymerizable composition of matter containing 60 wt.% hydroxyethyl methacrylate phosphate monoester (MW 210) and 19 wt.% of the corresponding diester (MW 322), resulting in a monoester: diester mole ratio of 4.8. This ratio is unfavorable due to significant presence of the diester, and higher monoester:diester ratio compositions are preferred.

A known means of increasing the phosphorylation selectivity towards the phosphate monoester is lowering the reaction temperature. In a neat system, the ability to lower temperature is constrained, however, due to issues around increased viscosity. The material can become too viscous, when cooled, to achieve good mixing. Another limitation with reducing temperature is that, while doing so improves monoester selectivity, it simultaneously lowers the rate of formation of monoester and diester.

Another problematic aspect of these phosphorylation mixtures relates to high viscosity. The PPA raw material, the reaction mixture, and the reaction product have high viscosities, which slow mass transfer and pose general material handling problems. One solution to lower the product viscosity is to conduct the reaction in the presence of a solvent or to dilute the final reaction product with a solvent. Reference JP 2006-001863A states that inert, aprotic solvents, such as aromatics and saturated aliphatics, are solvents for the phosphorylation reaction. The use of such solvents, however, is unfavorable due to their lack of contribution to the application properties for polymers and formulated polymers (e.g. paints, adhesives, coatings, etc.) containing the phosphate monoester, and therefore such solvents need to be removed. Costly processing time to remove the solvent is incurred, and when the solvent is removed, the problematic viscosity of the composition returns.

The present invention solves these problems of the art by increasing the monoester:diester mole ratio of the polymerizable reaction product by a process that advantageously uses the same basic, low-cost raw materials and avoids costly purification to increase the monoester content and avoids the need for solvent removal. According to this invention, the phosphorylation reaction is conducted in the presence of a reaction solvent, specifically a polymerizable solvent or a protic organic solvent, i.e., a carboxylic acid containing-solvent. The process for conducting the reaction may be batch or continuous. Significant improvements can be made even at low solvent levels, such as at about 15 wt.%, which is especially beneficial for batch processes in that good reactor productivity can be maintained.

Accordingly, the present invention provides a process for providing improved polymerizable compositions comprising reacting at least one hydroxyalkyl (meth)acrylate with at least one polyphosphoric acid in the presence of at least one solvent wherein the at least one solvent is either a polymerizable solvent or a protic organic solvent.

With proper choice of polymerizable solvent, the solvent will incorporate into the polymer matrix and become part of the final polymer product. With proper choice of protic organic solvent, the solvent will replace like additives often employed during final product formulation (e.g. formic acid, acetic acid, long-chain fatty acids, or their corresponding salts) where, again, the solvent will be a necessary part of the final product composition (e.g. paint formulation). In either case of selecting polymerizable solvents or protic organic solvents, there is no need to remove the solvent after the phosphorylation reaction. The reaction pressure is selected, according to the choice of solvent and reaction temperature, to ensure that boiling of the reaction mixture is suppressed. Thus, the reaction pressure should exceed the vapor pressure of the reaction mixture.

As used herein, polymerizable solvent is meant any olefinically polymerizable species with solvent-bearing properties that is capable of polymerizing with the phosphoalkyl methacrylate in the polymerizable composition's application except that the hydroxyalkyl (meth)acrylate monomers employed in the reaction and the phosphoalkyl methacrylate product itself are excluded from the present definition of polymerizable reactive solvent. Preferably, the solvent and temperature are selected to allow atmospheric reaction pressure.

In one aspect of the invention, the reaction is conducted in the presence of at least one polymerizable solvent. These polymerizable solvents, or "diluent monomers," do not need to be removed from the reaction mixture prior to use in the final application. These solvents are used at 10 to 90 wt.% of the final reaction mixture. Suitable examples of polymerizable solvents include but are not limited to acrylic and methacrylic acids, C₁-C₂₀ linear, branched, or cyclic alkyl esters of acrylic or methacrylic acid including but not limited to heterocyclic (meth)acrylates (such as 3-oxazolidinyl ethyl methacrylate, 5-[2-oxazolinyl]-pentyl methacrylate); aminoalkyl (meth)acrylates (such as N,N-dimethyl amino-ethyl acrylate, N,N-diethyl amino-propyl methacrylate); (meth)acrylamides (such as N-methyl acrylamide, N,N-dimethylaminopropyl methacrylamide); epoxide-containing (meth)acrylates (such as glycidyl (meth)acrylate); unsaturated alkyl and cycloalkyl (meth)acrylates (such as vinyl acrylate, allyl methacrylate, 2,4-hexadienyl methacrylate and dicyclopentenyl oxyethyl methacrylate); silicon-containing (meth)acrylates (such as trimethoxysilylpropyl acrylate, diethoxymethylsilylpropyl methacrylate, ispropoxydimethylsilylpropyl acrylate); aromatic (meth)acrylates (such as benzyl acrylate, phenyl acrylate, 4-chlorophenylethyl methacrylate); straight chain or branched haloalkyl (meth)acrylates (such as 2,2,2-trifluoroethyl acrylate, hexafluoroisopropyl methacrylate); terminal alkenes (such as 1-butene, 1-hexene, vinylcyclohexene); aralkenes (such as styrene, α-methyl styrene, 4-methyl styrene, 4-methoxy styrene); heterocyclic alkenes (such as 2-, 3-, or 4-vinyl pyridines and N-vinyl imidazole); dienes (such as butadiene, isoprene, vinylidene chloride); vinyl halides (such as vinyl chloride, tetrafluoroethylene); vinyl esters (such as vinyl acetate, vinyl benzoate); vinyl ketones (such as methyl vinyl ketone); vinyl amides (such as N-vinyl formamide, N-vinyl acetamide); vinyl isocyanate; aldehyde containing vinyl functionality (such as acrolein, methacrolein, and their acetal derivatives); epoxyalkenes (such as 3,4-epoxybut-1-ene); cyano containing vinyl functionality (such as acylonitrile, methacrylonitrile and fumaronitrile); vinyl silanes and alkoxyvinyl-silanes (such as vinyltrimethoxysilane, vinyltrimethylsilane, vinyldiethoxymethylsilane); unsaturated diesters (such as dimethylmaleate, dibutylfumarate, diethyl itaconate); and functional (meth)acrylates (such as isocyanotoethyl methacrylate, acryloylchloride, aceto acetoxyethyl methacrylate, acryloylpropionic acid [AOPA]); or mixtures thereof.

Specifically, it is surprising that these polymerizable solvents can be employed as solvents for this reaction due to their propensity to undergo Michael-type addition, via the olefinic double bond, with hydroxy-containing species, i.e., the hydroxyalkyl (meth)acrylate reaction substrate. Of principal concern for making the subject polymerizable compositions is the loss of monoester yield on the hydroxyalkyl (meth)acrylate substrate due to consumption of the latter via these Michael reactions. In the present reaction systems employing polymerizable solvents, the monoester yield was maintained and in many cases, such as for the use of methyl methacrylate, was actually found to increase.

In another aspect of the invention, the reaction is conducted in the presence of at least one protic organic solvent, for example a low molecular weight carboxylic acid, or a mixture of carboxylic acids. When a carboxylic acid solvent is present in an amount equal to 10 to 90 wt.% of the final reaction mixture, the phosphate monoester:diester mole ratio is increased relative to conducting the reaction neat. Suitable acids include C₁ -C₂₀ carboxylic acids.

Furthermore, in another aspect of the present invention, polymerizable solvent(s) and protic organic solvent(s) are combined in the process as co-solvents. Thus, in the present invention, a mixture of (meth)acrylic acids, (meth)acrylic alkyl ester(s) and/or protic organic solvent(s) may be present in the reaction system.

In still another aspect of the present invention, use of at least one polymerizable solvent or at least one protic organic solvent can be combined with lowering the temperature of the reaction to achieve a multiplicative selectivity enhancement. For an example employing hydroxyalkyl methacrylate, separately-achieved relative increases in monoester:diester ratio were 67% and 17%, respectively, for i) reducing the neat reaction temperature from 65 °C to 45 °C and for ii) conducting the 65 °C reaction in the presence methyl methacrylate at 17 wt.% of the reaction mixture versus the neat reaction. The combined ratio increase for conducting the reaction at 45 °C with 17 wt.% methyl methacrylate was 105% relative to the neat reaction at 65 °C, which exceeded the sum of increases for temperature reduction and solvent use alone.

### EXAMPLES

### Comparative Example 1

A reaction apparatus comprising a 500 mL, jacketed, glass "resin kettle" reaction flask; a two-stage agitator; and a reflux condenser was assembled. Heating and cooling were affected by means of a Thermo Scientific NESLAB RTE 740 circulator bath, which supplied Dynalene HF-LO heat transfer fluid to the reactor jacket. The bath temperature was adjusted to achieve the desired reactor temperature. The two-stage agitator comprised a bottom blade set (3-in. diameter, four-blade, 45-deg. pitch) and a middle blade set (2.5-in. diameter, three-blade, swept pitch), which was positioned at two-thirds of the reactor's straight-side height from the bottom. A thermocouple, a sparge gas tube, and a feed tube were positioned near the top of the bottom agitator blade set. The condenser was vented to the atmosphere via a drying tube.

In a separate feed vessel, a reservoir of 2-hydroxyethyl methacrylate, having less than 0.15 wt.% water, was adjusted to contain by weight 1950 ppm methoxyphenol. Polyphosphoric acid (115% grade, 400 g) was charged to the empty reaction flask. A 10 sccm flow of 8% O₂/92% N₂ mixed gas was then introduced to the reactor via the sparge tube. The agitator was set to 180 rpm, and the polyphosphoric acid was heated to 65 °C. After heating the acid, 437 g of the 2-hydroxyethyl methacrylate was fed via a peristaltic pump and the feed tube into the reactor, which was operated at 65 °C, over seven hours. The resulting mixture was held at 65 °C for an additional six hours and then cooled to room temperature.

The reaction product was analyzed by high-performance liquid chromatography using an Agilent 1100 Series LC System liquid chromatograph equipped with a Supelco Inc. Discovery Bio Wide Pore C 18 column (25 cm by 4.6 mm, 5 µm media) and an ultraviolet light detector.

The reaction product contained 44.7 wt.% monoester and 10.5 wt.% diester, a corresponding monoester: diester molar ratio of 6.53.

### Example 1

A reaction product was generated by the same procedure given in Comparative Example 1 except that 169 g of methyl methacrylate were mixed with the polyphosphoric acid prior to addition of the 2-hydroxyethyl methacrylate. The reaction product, on a basis excluding the methyl methacrylate, contained 47.0 wt.% monoester and 9.43 wt.% diester, a corresponding monoester:diester molar ratio of 7.64.

### Example 2

A reaction product was generated by the same procedure given in Comparative Example 1 except that 302 g of methyl methacrylate were mixed with the polyphosphoric acid prior to addition of the 2-hydroxyethyl methacrylate. The reaction product, on a basis excluding the methyl methacrylate, contained 47.9 wt.% monoester and 7.58 wt.% diester, a corresponding monoester:diester molar ratio of 9.69.

### Example 3

A reaction product was generated by the same procedure given in Comparative Example 1 except that 418 g of methyl methacrylate were mixed with 200 g polyphosphoric acid prior to addition of 218 g 2-hydroxyethyl methacrylate. The reaction product, on a basis excluding the methyl methacrylate, contained 51.0 wt.% monoester and 7.24 wt.% diester, a corresponding monoester:diester molar ratio of 10.8.

### Comparative Example 2

A reaction product was generated by the same procedure given in Comparative Example 1 except that the reaction temperature during both the addition of the 2-hydroxyethyl methacrylate and the hold period was 45 °C. The reaction product contained 38.3 wt.% monoester and 5.37 wt.% diester, a corresponding monoester: diester molar ratio of 10.9.

### Example 4

A reaction product was generated by the same procedure given in Comparative Example 2 except that 169 g of methyl methacrylate were mixed with the polyphosphoric acid prior to addition of the 2-hydroxyethyl methacrylate. The reaction product, on a basis excluding the methyl methacrylate, contained 41.4 wt.% monoester and 4.75 wt.% diester, a corresponding monoester:diester molar ratio of 13.4.

### Example 5

A reaction product was generated by the same procedure given in Comparative Example 2 except that 418 g of methyl methacrylate were mixed with 200 g polyphosphoric acid prior to addition of 218 g 2-hydroxyethyl methacrylate. The reaction product, on a basis excluding the methyl methacrylate, contained 45.9 wt.% monoester and 4.31 wt.% diester, a corresponding monoester: diester molar ratio of 16.3.

### Example 6

A reaction product was generated by the same procedure given in Comparative Example 2 except that 181 g of butyl acrylate were mixed with the polyphosphoric acid prior to addition of the 2-hydroxyethyl methacrylate. The reaction product, on a basis excluding the butyl acrylate, contained 38.1 wt.% monoester and 3.89 wt.% diester, a corresponding monoester: diester molar ratio of 15.0.

### Example 7

A reaction product was generated by the same procedure given in Comparative Example 2 except that 175 g of methacrylic acid were mixed with the polyphosphoric acid prior to addition of the 2-hydroxyethyl methacrylate. The reaction product, on a basis excluding the methacrylic acid, contained 30.1 wt.% monoester and 2.20 wt.% diester, a corresponding monoester:diester molar ratio of 21.0.

### Example 8

A reaction product was generated by the procedure given in Comparative Example 1 where the reaction temperature during both the addition of the 2-hydroxyethyl methacrylate and the hold period was 35 °C. To conduct the reaction, 418 g of methyl methacrylate were mixed with 200 g polyphosphoric acid prior to addition of 218 g 2-hydroxyethyl methacrylate. The reaction product contained 40.0 wt.% monoester and 3.33 wt.% diester, a corresponding monoester:diester molar ratio of 18.4.

### Example 9

A reaction product is generated by the same procedure given in Comparative Example 1 except that 169 g of acetic acid is mixed with the polyphosphoric acid prior to addition of the 2-hydroxyethyl methacrylate. The reaction product, on a basis excluding the acetic acid contains greater than 45 wt.% monoester and less than 10 wt.% diester and has a monoester: diester molar ratio greater than 6.

## Claims

1. A process for providing improved polymerizable compositions comprising reacting at least one hydroxyalkyl (meth)acrylate with at least one polyphosphoric acid in the presence of at least one solvent wherein the at least one solvent is either a polymerizable solvent or a protic organic solvent.

2. The process of claim 1 wherein the solvent is at least one C₁ - C₂₀ linear, branched, or cyclic alkyl ester of acrylic or methacrylic acid or mixtures thereof.

3. The process of claim 1 wherein the solvent is at least one C₁ - C₂₀ carboxylic acid or a mixture of acids thereof.

4. The process of claim 1 wherein solvent is at least one compound selected from the group consisting of:
C₁ - C₂₀ carboxylic acid, C₁ - C₂₀ linear, branched, or cyclic alkyl ester of acrylic or methacrylic acid, aminoalkyl (meth)acrylates, (meth)acrylamides, epoxide-containing (meth)acrylates, unsaturated alkyl and cycloalkyl (meth)acrylates, silicon-containing (meth)acrylates, aromatic (meth)acrylates, straight chain or branched haloalkyl (meth)acrylates, terminal alkenes, aralkenes, heterocyclic alkenes, dienes, vinyl halides, vinyl esters, vinyl ketones, vinyl amides, vinyl isocyanate; aldehydes containing vinyl functionality, epoxyalkenes, cyano containing vinyl functionality, vinyl silanes and alkoxyvinyl-silanes, unsaturated diesters, and functional (meth)acrylates, or mixtures thereof.

5. The process of claim 1 wherein the solvent is at least one acrylic acid or methacrylic acid or a mixture thereof.

6. The process of claim 1 wherein the solvent is a mixture of at least one (meth)acrylic alkyl ester and at least one protic organic solvent.

7. The process of claim 1 wherein the reaction is a batch reaction.

8. The process of claim 1 wherein the reaction is continuous.

9. The process of claim 1 wherein the reaction occurs at a temperature below 40 °C.

## Patentansprüche

1. Verfahren zur Bereitstellung verbesserter polymerisierbarer Zusammensetzungen, umfassend das Umsetzen mindestens eines Hydroxyalkyl(meth)acrylats mit mindestens einer Polyphosphorsäure in der Gegenwart mindestens eines Lösungsmittels, wobei das mindestens eine Lösungsmittel entweder ein polymerisierbares Lösungsmittel oder ein protisches organisches Lösungsmittel ist.

2. Verfahren nach Anspruch 1, wobei das Lösungsmittel mindestens ein linearer, verzweigter oder cyklischer C₁ - C₂₀ Alkylester von Acryl- oder Methacrylsäure oder Gemische davon ist.

3. Verfahren nach Anspruch 1, wobei das Lösungsmittel mindestens eine C₁ - C₂₀ Carbonsäure oder ein Gemisch von Säuren davon ist.

4. Verfahren nach Anspruch 1, wobei das Lösungsmittel wenigstens eine Verbindung, ausgewählt aus der Gruppe, bestehend aus:
C₁ - C₂₀ Carbonsäure, linearer, verzweigter oder cyklischer C₁ - C₂₀ Alkylester von Acryl- oder Methacrylsäure, Aminoalkyl(meth)acrylaten, (Meth)acrylamiden, Epoxid-haltigen (Meth)acrylaten, ungesättigten Alkyl- und Cycloalkyl-(meth)acrylaten, Silizium-haltigen (Meth)acrylaten, aromatischen (Meth)-acrylaten, geradkettigen oder verzweigten Halogenalkyl(meth)acrylaten, terminalen Alkenen, Aralkenen, heterocyclischen Alkenen, Dienen, Vinylhalogeniden, Vinylestern, Vinylketonen, Vinylamiden, Vinylisocyanat; Aldehyden, die Vinylfunktionalität enthalten, Epoxyalkenen, Cyanorest, der Vinylfunktionalität enthält, Vinylsilanen und Alkoxyvinylsilanen, ungesättigten Diestern und funktionalisierten (Meth)acrylaten, oder Gemischen davon, ist.

5. Verfahren nach Anspruch 1, wobei das Lösungsmittel mindestens eine Acrylsäure oder Methacrylsäure oder ein Gemisch davon ist.

6. Verfahren nach Anspruch 1, wobei das Lösungsmittel ein Gemisch von mindestens einem (Meth)acrylsäurealkylester und mindestens einem protischen organischen Lösungsmittel ist.

7. Verfahren nach Anspruch 1, wobei die Reaktion eine Chargenreaktion ist.

8. Verfahren nach Anspruch 1, wobei die Reaktion kontinuierlich ist.

9. Verfahren nach Anspruch 1, wobei die Reaktion bei einer Temperatur unterhalb von 40 °C abläuft.

## Revendications

1. Procédé d'obtention de compositions polymérisables améliorées comprenant la mise en réaction d'au moins un (méth)acrylate d'hydroxyalkyle avec au moins un acide polyphosphorique en présence d'au moins un solvant, l'au moins un solvant étant soit un solvant polymérisable un solvant organique protique.

2. Procédé selon la revendication 1, dans lequel le solvant est au moins un ester alkylique en C₁-C₂₀ linéaire, ramifié ou cyclique d'un acide acrylique ou méthacrylique ou des mélanges de ceux-ci.

3. Procédé selon la revendication 1, dans lequel le solvant est au moins un acide carboxylique en C₁-C₂₀ ou des mélanges de ces acides.

4. Procédé selon la revendication 1, dans lequel le solvant est au moins un composé choisi dans le groupe constitué par un acide carboxylique en C₁-C₂₀, un ester alkylique en C₁-C₂₀ linéaire, ramifié ou cyclique d'acide acrylique ou méthacrylique, des (méth)acrylates d'aminoalkyle, des (méth)acrylamides, des (méth)acrylates contenant un époxyde, des (méth)acrylates d'alkyle et de cycloalkyle insaturés, des (méth)acrylates contenant du silicium, des (méth)acrylates aromatiques, des (méth)acrylates d'halogénoalkyle à chaîne linéaire ou ramifiée, des alcènes terminaux, des aralcènes, des alcènes hétérocycliques, des diènes, des halogénures de vinyle, des esters vinyliques, des vinylcétones, des vinylamides, des isocyanates de vinyle, des aldéhydes contenant une fonctionnalité vinyle, des époxyalcènes, un groupe cyano contenant une fonctionnalité vinyle, des vinylsilanes et des alcoxyvinylsilanes, des diesters insaturés, et des (méth)acrylates fonctionnels, ou des mélanges de ceux-ci.

5. Procédé selon la revendication 1, dans lequel le solvant est au moins un acide acrylique ou un acide méthacrylique ou un mélange de ceux-ci.

6. Procédé selon la revendication 1, dans lequel le solvant est un mélange d'au moins un ester alkylique d'acide (méth)acrylique et d'au moins un solvant organique protique.

7. Procédé selon la revendication 1, dans lequel la réaction est une réaction discontinue.

8. Procédé selon la revendication 1, dans lequel la réaction est une réaction continue.

9. Procédé selon la revendication 1, dans lequel la réaction se produit à une température inférieure à 40 °C.
